Europäisches Patentamt

(19) European Patent Office

Office européen des brevets

(11) Publication number: **0 022 231**
**B1**

(12) **EUROPEAN PATENT SPECIFICATION**

(45) Date of publication of patent specification: **12.09.84**

(21) Application number: **80103690.6**

(22) Date of filing: **30.06.80**

(51) Int. Cl.³: **F 16 H 3/08**

(54) **Change gear mechanism particularly for heavy duty, low RPM operation.**

(30) Priority: **05.07.79 IT 2413979**

(43) Date of publication of application:
**14.01.81 Bulletin 81/02**

(45) Publication of the grant of the patent:
**12.09.84 Bulletin 84/37**

(84) Designated Contracting States:
**DE FR GB**

(56) References cited:
**BE-A- 634 875**
**DE-B-1 048 160**
**DE-B-1 095 613**
**FR-A- 357 967**
**FR-A- 376 640**
**FR-A- 995 477**
**FR-A-2 295 310**

(73) Proprietor: **COMER S.p.A.**
**Zona Industriale**
**I-42046 Villanova di Reggiolo (Province of Reggio Emilia) (IT)**

(72) Inventor: **Fabbri, Fabrizio**
**Via Zurlini, 47**
**I-41100 Modena (IT)**

(74) Representative: **Modiano, Guido et al**
**MODIANO & ASSOCIATI S.A.S. Via Meravigli, 16**
**I-20123 Milan (IT)**

Courier Press, Leamington Spa, England.

# Description

This invention relates to a change gear mechanism particularly for heavy duty or high torque, low rpm operation.

As is known, in a power drive, the situation becomes more critical, for a given transmitted power, at low rpm's than at high rpm's because, for a given power, the transmitted torque grows inversely with the rpm's. High torque values at low rpm conditions are often a requisite with certain machining processes, such as in rolling mills, certain crushers, earthmoving, hoisting mechanisms, and agricultural machinery. The latter constitute, from that point of view, a specially homogeneous and interesting field of application, and reference will be made expressedly thereto, although the invention will not be limited to this specific field alone.

Except for very special cases, where the torque variations are more conveniently coped with a flywheel, like in rolling mills, the function of adjusting the torque, from the power source to the utilization outlet, is performed by transmission or reduction gears. Agricultural tractors, and the heavier ones (earthmovers being also considered as included in this class of machinery) especially, already come equipped with transmissions suitable for very low speed travel. However, some special machines for seasonal operation, which require higher-than-normal amounts of force and torque, such as certain harrows, which in some soil conditions may require unforeseeable amounts of torque, are usually equipped with appropriate reduction gears or speed transmissions of their own.

While specially designed to meet each specific situation, such transmissions and reduction gears may still pose serious design problems, be continuously exposed to the risk of failure owing to the impossibility of oversizing the various components to successfully meet all occurrences, be liable to wear rapidly, and accordingly involve high maintenance costs. Such difficulties are of course posed by the need of not exceeding a given cost, and even more by the overall dimensions of these assemblies, which are already excessive and should be desirably reduced. With transmissions, whereto this invention relates more specifically, the large overall dimensions are mainly attributable to the robust design of the sliding gears, i.e. to the travel lengths that must be allowed for those transmission gears. This involves longer, and proportionately bulkier, shafts, stronger bearings, and so forth.

Theoretically, it would be an excellent approach to a solution of the problem to make arrangements for keeping those gears which are to be shifted for engagement and disengagement, either axially stationary or approachable to one another, by making them rotatively rigid with the shaft itself, or free, by shifting clutch sliders, or the like, within a hollowed shaft, by means of a small concentrical rod. Actually, arrangements of that kind have already been proposed and implemented, but only for higher speed lower power transmissions than the ones being considered; and it is in this field, where a compact arrangement would be, for a number of reasons, more welcome than elsewhere, that the inherently weak design of the movable concentrical clutches makes them unsuitable. In some isolated cases, the cited arrangement indeed could be adopted, but on condition that no external control were provided: to change the speed ratio, therefore, one had to uncover or open the gearcase. For some machinery, such an arrangement, which only allows for occasional speed ratio changes in the course of the year, has been acceptable, but it certainly does not represent a universally applicable approach. From DE—B—1 095 613 a change gear mechanism is known comprising a main shaft, a plurality of juxtaposed change gear wheels having hubs rotatorily idle on said main shaft, a driven shaft parallel to said main shaft and having a plurality of juxtaposed ring gears rigid therewith, each of said ring gears being in constant mesh with one respective of said change gear wheels, keyway means with rectangular cross-section, extending parallel to the axis of said main shaft on the periphery thereof and having a bottom, a longitudinal key member slidable with a base along said keyway against said bottom and having a head portion and connection means for an actuating mechanism thereof, said key member having a median plane containing the axis of said main shaft, keyseats in the hubs of each of said change gear wheels for receiving therein said head portion when in selectively locked condition of said main shaft, wherein said head portion has a lower part fitting in the keyway and an upper part projecting beyond said keyway.

In particular in said DE—B—1 095 613 the key member is divided into two elements: a draw key having a slot therein, and a little cylinder arranged in said slot and partially projecting therefrom. The seats in the hubs of the gear wheels are rounded off with bending radius which, as visible from Fig. 2 of this patent, is greater than the radius of the cylinder. Therefore the forces acting on the cylinder are concentrated on three generatrices of the latter and in cross-section are those illustrated in the cited figure. Although in this patent it is noted that with cylinders a better force distribution is achieved than with rolls, nevertheless the structure described is not able to resist for a long time, when high torques must be transmitted. In fact in this case the forces exerted on the key are extremely high and reduce the life of the key itself due to the reduced contact areas between key and surrounding elements. On the other hand, by designing the key so as to obtain larger contact areas, because it is necessary to maintain a certain play between key, seats and keyway, the forces acting on the key tend to rotate the latter, so that the contact between key and surrounding elements takes place on the protruding edges of the key and the contact area is again reduced.

The task of the present invention is therefore to solve the above problem in a mechanically and economically advantageous manner, while maintaining a compact structure of the main shaft, which in this way can better resist to mechanical stresses.

The solution of such a problem appears from the characterizing part of the new Claim 1.

The features and advantages of the invention will be now detailed in the following description of a preferred embodiment thereof, with reference to the accompanying drawings, wherein:

Figure 1 is an axial sectional view partially exploded of a transmission according to the invention;

Figure 2 is a detail view, in perspective, of the shaft with the slidable key;

Figure 3 shows in section the distribution of the stresses in a conventional key;

Figure 4 shows, in section, the distribution of the stresses in an improved key according to this invention; and

Figure 5 is a sectional view of another embodiment of an improved key according to the invention.

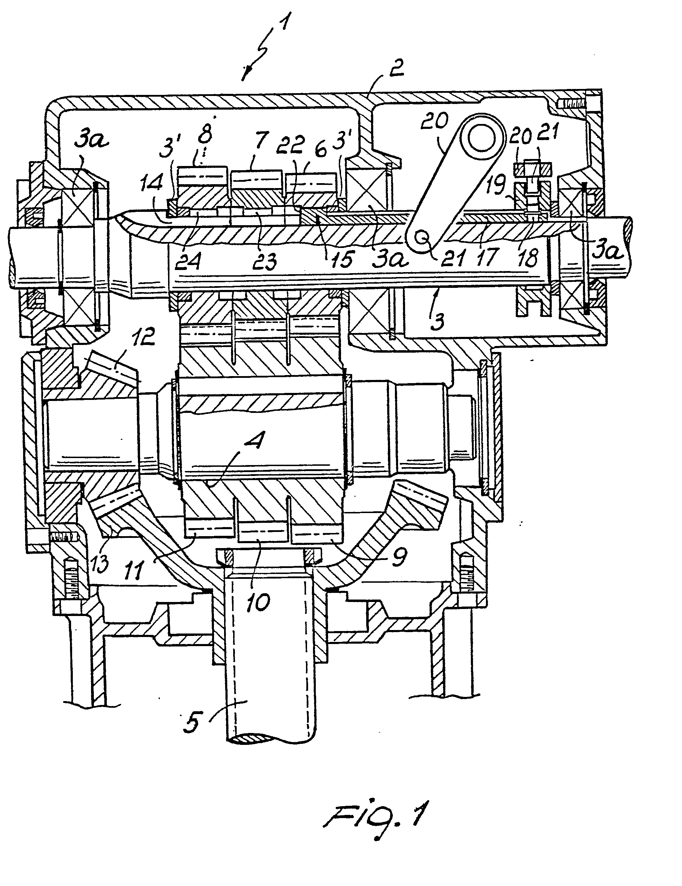

The change gear transmission shown in Figure 1, and generally indicated at 1, is a typical example of a transmission for agricultural machines having a very high output torque, which evidences how the invention has afforded a reduction in the overall dimensions, and above all in some critical dimensions. In a quite conventional way, the transmission 1 comprises a transmission body or case 2, wherein there are mounted a main shaft 3, an intermediate shaft 4, and an output shaft 5. The main shaft carries three main speed-changes gears 6, 7, 8, which are idle but can be individually locked for rotation with the shaft itself and are axially fixed by means of abutment rings 3'. The shaft is supported in three bearings 3a, including an intermediate one.

The main gears 6, 7, 8 mesh with three ring gears 9, 10, 11, which are axially and rotatively fixed on the intermediate shaft 4, extending parallel to the shaft 3, which is thus driven at different rpm's depending on which main gear has been engaged.

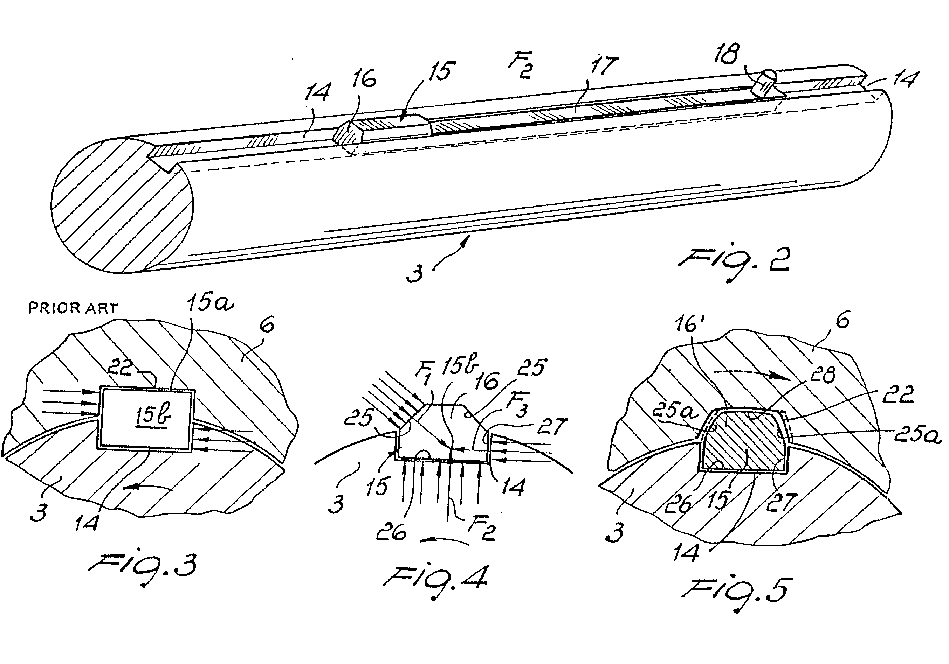

The intermediate shaft 4 carries, rigid therewith at one end, a step-down bevel pinion gear 12, which drives a bevel gear 13 mounted at the shaft 5 end. The mounting details of all such components require no further explanation because well known in the art, excepting for this invention improvement resulting in any of the gears 6, 7, 8 becoming selectively locked to the shaft 3. In Figure 1, this arrangement is evidenced in the sectional view of the shaft 3, whilst in Figure 2 it is shown in perspective, again in assembly with the shaft but with the remaining parts omitted. At the three gears 6, 7, 8, the shaft 3 has a longitudinal groove or keyway 14, which extends to the right of the drawing. In the groove 14, an improved design key 15 is slidable which has a head or ridge 16 protruding from the groove for engagement with the gears, and a stem member or guiding rod 17 which fits inside the groove. From the guiding rod, there protrudes out of the shaft 3 a drive pin 18. The drive pin, which evidently rotates with the shaft, and slides therein, engages an annular recess in a ring 19 arranged to slide and rotate on the shaft. In order to cause the ring 19 to slide, and along with it the rod and key, a gear shifting yoke 20 is provided, said yoke having ring-following pins 21. For clarity reasons, the yoke 20 is shown in exploded representation in the drawing, and one leg of the yoke is represented in one of possible positions of engagement with the ring 19. Each gear 6, 7, 8 has a respective seat 22, 23, 24 adapted for receiving the head 16 of the key 15, which is so sized as to engage each time a single gear. Annular clearance recesses are provided therebetween, such that the key cannot accidentally engage two gears at one time, which would block the whole transmission.

The yoke 20 is actuated by per se known actuating mechanisms or leverages, not shown.

This transmission operates as follows.

By means of the yoke 20, the ring 19 is caused to slide axially along the shaft 3, and through the pin 18 drags the key rod 17 therealong. Thus, in a selective manner, the key 15 is brought to lock onto the shaft a selected one of the three gears 6, 7, 8, which are in constant mesh with their corresponding gear wheels 9, 10, 11. Then, the gear thus locked by the key will transfer the motion from the main shaft 3 to the intermediate one 4, whereas the other two gears in the trio continue to idly follow their meshing gear wheels.

This compact and robust arrangement could not be implemented satisfactorily heretofore. A comparison of the sectional profiles of conventional keys and improved keys will confirm the mechanical significance of the above statement.

In Figure 3, there is shown a typical distribution of the stresses within a conventional key 15a. Such stresses will generate, in addition to local compressions, a high shear force and a moment tending to rotate the key about its central axis 15b. As soon as some free play is developed by the key, it tends to arrange itself obliquely and the stresses, instead of being distributed over face portions, will concentrate along the line of contact with the related keyway corner edge; no key can endure this for long, it requiring a working play in order to enable the gearshifts. Therefore, this key is an unstable one and can only operate correctly if retained in its correct position by the accuracy of the keyway in which it fits.

Figure 4 illustrates the key 15 according to this invention. Its projecting head 16 has a substantially trapezium-like profile, a similar profile having also its related keyway in the gear hub, which will accordingly apply the stresses shown diagramatically on the inclined or sloping face 25. The force $F_1$ is the resultant of the stress applied, and is designed to intersect the base face 26 of the key and press it against the bottom of the keyway 14. On the base faces 26 and 27, laterally to the key, there are developed compressive stresses which produce resultant reaction forces $F_2$ and $F_3$, which counterbalance, in combination, the applied force $F_1$.

If, in addition to designing the inclinations and dimensions of the key sides to direct the resultant $F_1$ to intersect the base 26, care is taken to have its moment about the central axis 15 generate a counterclockwise rotation of the key, as is indeed the case in Figure 4 then, contrary to the situation of Figure 3, it is ensured that the key never tends to raise from the keyway and arrange itself obliquely. Thus, its stability and a more uniform stressing thereof are ensured.

The individually optimum shape for the key may be found either through simple calculations, or through graphical cross-checking. For example, it can be immediately seen that, by widening the base 26 of the key, for a given depth of the keyway, it will be easier to meet the cited requisites of getting $F_1$ to intersect the base 26, to generate a counterclockwise moment, $F_1$ maintaining an essentially tangential direction.

Figure 5 illustrates an embodiment of the key 15, according to this invention teachings, as disclosed thus far, wherein further improvements have been introduced. The key faces which are intended for contacting one gear are in fact rounded off, and plenty of play has been provided in order to favor, without any chance for damage, the sliding movement and engagement of the key.

More specifically, this improved key has its portion within the keyway 14 unchanged, whereas the protruding head 16', while retaining a substantially trapezium-like profile, has inclined or sloping surfaces 25a, which absorb the discharged forces and are slightly arcuate, as is the top face 28. The related seat 22 in the gear 6 has correspondingly (for example) rounded walls. Originally, the seat 22 (shown in full lines) is appreciably larger than the key, and it should be noted that those faces of the seat 22 which contact the sloping surfaces 25a have such an inclination that they ensure a perfect contact, after the seat has taken the attitude shown in dotted lines, having taken up the play, for relative rotation in the direction of the dotted line arrow.

This improved approach, without problems, affords a very high sliding ability for the key and great ease of engagement of the same into the gear seats.

Thus, two aspects of the invention have been recognized: namely, the concept of a compact transmission and of a self-stabilizing key. And their intimate mutual interlocking has been recognized: not only is the key in agreement with the transmission task of transmitting higher torques, but thanks to its peculiar movability (because, contrary to other keys, it can have plenty of play in its keyway), it has made the transmission of Figure 1 feasible, with short and well supported shafts, the main one including in addition an intermediate bearing, with non-slidable gears, and with a minimum of notches and weak points, which allow even very high torques to be transmitted, for the available room.

In actual practice, the transmission with key according to this invention allows the attainment of the maximum resisting section of the main shaft, the transmission of a very high torque relatively to the available room, and a very simple construction.

Satisfactory results have been obtained with a projecting head portion of the key having a width of 18 mm, an active length of 20 mm and a height of 11 mm with the portion projecting beyond the periphery of the shaft and penetrating into the seat of the wheel hub of 5.5 mm. The angle of the oblique plane is of 20 degrees with respect to the median plane of the key which passes through or contains the axis of the shaft 3 when the key is in assembled condition. It has been found that the desired effect is obtained when the angle of obliqueness is maintained in a range from 15 to 30 degrees. Advantageously the play between the key and the seat walls in the hub may be left as high as 0.5 mm on both sides, i.e. totaling 1.00 mm.

Furthermore the inclination of the walls of the seats of the hub is advantageously different from that of the oblique surface by about minus 1 degree in order to compensate the rotation due to the play.

By virtue of the substantial play the keyhead may be easily inserted in the hub seat, when the gears are slowly rotated and are not under load.

When compared with conventional change gear mechanisms a reduction in the cost, i.e. occupied space, of 15 to even 25% may be obtained with a change gear mechanism of this invention.

### Claims

1. A change gear mechanism particularly for heavy duty, low rpm operation, comprising a main shaft (3), a plurality of juxtaposed change gear wheels (6—8) having hubs rotatorily idle on said main shaft (3), a driven shaft (4) parallel to said main shaft (3) and having a plurality of juxtaposed ring gears (9—11) rigid therewith, each of said ring gears (9—11) being in constant mesh with one respective of said change gear wheels (6—8), a keyway (14) with rectangular cross-section, extending parallel to the axis of said main shaft (3) on the periphery thereof and having a bottom, a longitudinal key member (15) slidable with a base (26) along said keyway (14) against said bottom and having a head portion (16) and connection means (18, 19) for an actuating mechanism (20) thereof, said key member (15) having a median plane containing the axis of said main shaft (3), keyseats (22—24) in the hubs of each of said change gear wheels (6—8) for receiving therein said head portion (16) when in selectively locked condition of said main shaft (3), wherein said head portion (16) has a lower part received in the keyway (14) and an upper part projecting beyond said keyway (14), characterized in that said head portion (16) is integral with said key member (15) in a per se known manner, its lower part having a rectangular cross-section corresponding to the rectangular cross-section of said keyway (14) and said upper part having a substantially trapezoidal cross-section with oblique sides (25, 25a) in a per se known manner, and in that said keyseats (22—24) have a substantially trapezoidal cross-section corresponding to the substantially trapezoidal cross-section of said upper part, such that the forces exerted by said keyseats (22—24) on said head portion (16) have a resultant intersecting said base (26) of said key member (15).

2. A mechanism according to Claim 1, characterized in that the oblique sides (25—25a) of said trapezoidal cross-section form an angle with respect to said median plane in the range from 15 to 30 degrees.

3. A mechanism according to one or more of the preceding Claims, characterized in that the oblique sides (25a) have a camber formation and rounded off edges.

4. A mechanism according to one or more of the preceding Claims, characterized in that said upper part of said head portion (16) has an arcuated shape in cross-section.

## Revendications

1. Engrenage à changement de vitesse, notamment pour opération à grande puissance et bas t.p.m, comprenant un arbre principal (3), une pluralité de roues de changement de vitesse juxtaposées (6—8) ayant des moyeux montés fous en rotation sur ledit arbre principal (3), un arbre entraîné (4) parallèle audit arbre principal (3) et ayant une pluralité d'engrenages annulaires juxtaposés (9 à 11) solidaires dudit arbre, chacun desdits engrenages annulaires (9—11) étant en prise constante avec une roue à changement de vitesse respective (6—8), un chemin de verrouillage (14) à section rectangulaire s'étendant parallèlement à l'axe dudit arbre principal (3) à la périphérie de celui-ci et ayant un fond, un élément de verrouillage longitudinal (15) susceptible de coulisser avec une base (26) le long dudit chemin de verrouillage (14) contre ledit fond et ayant une portion de tête (16) et des moyens de connexion (18—19) pour un mécanisme d'actionnement (20) de celui-ci, ledit élément de verrouillage (15) ayant un plan médian contenant l'axe dudit arbre principal (3), des sièges de verrouillage (22—24) dans les moyeux de chacune des roues à changement de vitesse (6—8) pour y recevoir ladite portion de tête (16) lorsque l'on se trouve dans la condition bloquée sélectivement dudit arbre principal (3), ladite portion de tête (16) ayant une partie inférieure disposée dans le chemin de verrouillage (14) et une partie supérieure faisant saillie à l'extérieur dudit chemin de verrouillage (14), caractérisé en ce que ladite portion de tête (16) fait partie intégrante dudit élément de verrouillage (15) de manière connue en soi, sa partie inférieure ayant une section rectangulaire correspondant à la section rectangulaire dudit chemin de verrouillage (14) et ladite partie supérieure ayant une section sensiblement trapézoïdale avec des côtés obliques (25, 25a) de manière connue en soi, et en ce que lesdits sièges de verrouillage (22—24) ont une section sensiblement trapézoïdale correspondant à la section sensiblement trapézoïdale de ladite partie supérieure de façon que les forces exercées par lesdits sièges de verrouillage (22—24) sur ladite partie de tête (16) ont une résultante coupant ladite base (25) dudit élément de verrouillage (15).

2. Engrenage selon la revendication 1, caractérisé en ce que les côtés obliques (25—25a) de ladite section trapézoïdale forme un angle par rapport audit plan médian compris entre 15 et 30°.

3. Engrenage selon l'une quelconque des revendications précédentes, caractérisé en ce que lesdits côtés obliques (25a) sont courbes et présentent des bords arrondis.

4. Engrenage selon l'une quelconque des revendications précédentes, caractérisé en ce que ladite partie supérieure de ladite partie de tête (16) a une forme courbe en section.

## Patentansprüche

1. Zahnradwechselgetriebe, insbesondere für den Hochleistungsbetrieb bei niedrigen UpM, mit einer Antriebswelle (3); einer Vielzahl von nebeneinandergestellten Wechselzahnrädern (6—8), deren Naben auf der Antreibswelle (3) frei drehbar sind; einer Abtriebswelle (4) parallel zur Antreibswelle (3) mit einer Vielzahl von nebeneinandergestellten und mit ihr fest verbundenen Zahnkränzen (9—11), von denen jeder jeweils ständig mit einem der Wechselzahnräder (6—8) kämmt; einer Keilnut (14) mit rechteckigem Querschnitt, die sich parallel zur Achse der Antriebswelle (3) auf deren Außenfläche erstreckt und einen Boden aufweist; und einem langgestreckten Keilelement (15), das mit einer Basis (26) entlang der Keilnut (14) auf dem Boden derselben verschiebbar ist und einen Kopfteil (16) sowie Verbindungseinrichtungen (18, 19) für einen Betätigungsmechanismus (20) hiefür besitzt, wobei das Keilelement (15) eine die Achse der Antriebswelle (3) enthaltende Mittelebene hat; Keilsitzen (22—24) in den Naben eines jeden der Wechselzahnräder (6—8) zur Aufnahme des genannten Kopfteiles (16) bei in der wahlweisen Verriegelungsstellung sich befindlicher Antriebswelle (3), wobei der Kopfteil (16) einen in der Keilnut (14) liegenden unteren Teil und einen über die Keilnut (14) hinausragenden oberen Teil besitzt, dadurch gekennzeichnet, daß der genannte Kopfteil (16) in an sich bekannter Weise einteilig mit dem Keilelement (15) ausgebildet ist, sein unterer Teil einen rechteckigen Querschnitt besitzt, der dem rechteckigen Querschnitt der Keilnut (14) entspricht, und der obere Teil in an sich bekannter Weise einen im wesentlichen trapezförmigen Querschnitt mit schrägen Seiten (25, 25a) aufweist und die Keilsitze (22—24) einen im wesentlichen trapezförmigen Querschnitt besitzen, der dem im wesentlichen trapezförmigen Querschnitt des genannten oberen Teiles entspricht, so daß die durch die Keilsitze (22—24) auf den genannten Kopfteil (16) ausgeübten Kräfte eine die Basis (26) des Keilelementes (15) schneidende Resultierende besitzen.

2. Zahnradwechselgetriebe nach Anspruch 1, dadurch gekennzeichnet, daß die schrägen Seiten (25, 25a) des trapezförmigen Querschnittes in bezug auf die genannte Mittelebene einen Winkel im Bereich von 15 bis 30 Grad bilden.

3. Zahnradwechselgetriebe nach einem oder mehreren der vorhergehenden Ansprüche, dadurch gekennzeichnet, daß die schrägen Seiten (25a) eine gewölbte Form und abgerundete Ränder besitzen.

4. Zahnradwechselgetriebe nach einem oder mehreren der vorhergehenden Ansprüche, dadurch gekennzeichnet, daß der genannte obere Teil des Kopfteiles (16) eine gewölbte Querschnittsform besitzt.

Fig. 1

Fig. 2

Fig. 3
PRIOR ART

Fig. 4

Fig. 5